Europäisches Patentamt

European Patent Office

Office européen des brevets

(11) Publication number: **0 489 723 A2**

# EUROPEAN PATENT APPLICATION

(21) Application number: **92200661.4**

(22) Date of filing: **03.09.87**

(51) Int. Cl.⁵: **C10G 11/18**

This application was filed on 09 - 03 - 1992 as a divisional application to the application mentioned under INID code 60.

(30) Priority: **03.09.86 US 903183**
**03.09.86 US 903182**
**03.09.86 US 903187**
**03.09.86 US 903161**
**03.09.86 US 903364**
**03.09.86 US 903341**
**03.09.86 US 903185**

(43) Date of publication of application:
**10.06.92 Bulletin 92/24**

(60) Publication number of the earlier application in accordance with Art.76 EPC: **0 259 156**

(84) Designated Contracting States:
**BE DE FR GB IT NL**

(71) Applicant: **MOBIL OIL CORPORATION**
**3225 Gallows Road**
**Fairfax, Virginia 22037-0001(US)**

(72) Inventor: **Herbst, Joseph Anthony**
**60 Bryant Road**
**Turnersville, New Jersey 08012(US)**
Inventor: **Owen, Hartley**
**5 Riverview Terrace**
**Belle Mead, New Jersey 08502(US)**
Inventor: **Schipper, Paul Herbert**
**2506 Berwyn Road**
**Wilmington, Delaware 19810(US)**

(74) Representative: **Curtis, Philip Anthony**
**Patent Department, Mobil Court 3 Clements Inn**
**London WC2A 2EB(GB)**

(54) Process for fluidized catalytic cracking with reactive fragments.

(57) A catalytic cracking process operates with fragment generation, by thermally or catalytically cracking a hydrogen-rich hydrocarbon feed in the lower region of a riser reactor in the presence of conventional FCC catalyst and, preferably, an additive second catalyst of a shape selective zeolite with heavy feed added to react with the fragments. The process can be conducted in one or more riser FCC reactors. Preferably, an elutriable catalyst mixture of conventional and additive catalyst is used, with elutriation in a reactor riser or a catalyst stripper.

In conventional fluidized catalytic cracking (FCC) processes, a relatively heavy hydrocarbon feed, e.g., a gas oil, is mixed with a hot regenerated cracking catalyst in the base of an elongated riser reactor and cracked to lighter hydrocarbons. The cracked products and spent catalyst are discharged from the riser and separated into a vapor phase and a catalyst phase. The catalyst passes through a stripper to remove entrained hydrocarbons from the catalyst, then catalyst is regenerated. The catalyst circulates between the reactor and the regenerator and transfers heat from the regenerator to the reactor, supplying heat for the endothermic cracking reaction.

Catalytic cracking processes are disclosed in U.S. 3,617,497, 3,894,923, 4,051,013, 4,309,279 and 4,368,114 (single risers) and U.S. 3,748,251, 3,849,291, 3,894,931, 3,894,933, 3,894,934, 3,894,935, 3,926,778, 3,928,172, 3,974,062 and 4,116,814 (multiple risers).

In 4,051,013, a naphtha feed and a gas oil feed are converted in the presence of amorphous or zeolite cracking catalyst in a riser reactor to high octane gasoline.

Several FCC processes use a mixture of catalysts having different catalytic properties, e.g., U.S. 3,894,934 uses a mixture of a large pore zeolite cracking catalyst such as zeolite Y and shape selective zeolite such as ZSM-5. The combined catalyst system (or mixture) produces a gasoline product of relatively high octane rating.

In U.S. 4,116,814, Zahner teaches use of two different kinds of catalyst, with catalyst separation in the fluidized regenerator. This approach will work, but when a less coke sensitive catalyst containing ZSM-5 is used the catalyst spends time unnecessarily in the regenerator.

The approach taken in U.S. 4,490,241, Chou, to keeping the ZSM-5 additive out of the regenerator is to make the additive very light, so that it can be collected in secondary cyclones downstream of the riser reactor. Use of very small, or light, particles of ZSM-5 additive which is recycled from secondary cyclones will work but will result in rapid loss of ZSM-5 additive with catalyst fines. Use of light, or low density, ZSM-5 additive will also minimize the residence time of the ZSM-5 in the riser reactor because the light catalyst will not "slip" in the riser as much as the conventional catalyst. The light ZSM-5 will be largely kept out of the regenerator, but at the price of less residence time in the riser reactor.

U.S. 4,336,160 reduces hydrothermal degradation of conventional FCC catalyst by staged regeneration. However, all the catalyst from the reactor still is regenerated, thus providing opportunity for hydrothermal degradation.

Although FCC processes using very active zeolite based catalysts, or mixtures of two or more zeolite catalysts are known, they have not been used much for cracking of hydrogen-deficient feeds such a resids.

Hydrogen-deficient heavy hydrocarbon feeds such as resids, syncrudes, etc., are usually cracked to more valuable products by thermal cracking, perhaps with a hydrogen donor diluent material. The hydrogen donor diluent is a material, which can release hydrogen to a hydrogen-deficient oil in thermal cracking.

Resids are usually not cracked in FCC units for several reasons, one being too much coke formation. Coke formed during catalytic cracking is usually a hydrocarbonaceous material sometimes referred to as a polymer of highly condensed, hydrogen-poor hydrocarbons. Resids make a lot of coke, and conventional FCC's can only tolerate small amounts of resid and similar materials in the feed.

Although modern zeolite cracking catalysts, e.g., using zeolites X and Y, are low coke producing catalysts, FCC's still do not tolerate much resid in the feed.

Because heavy hydrogen deficient feeds are so hard to upgrade catalytically, refiners usually resort to thermal processings as a "last resort". Visbreaking reduces the viscosity of a heavy fuel fraction. Coking produces valuable liquid products, but converts a good portion of the feed to low value coke, frequently 20 to 30 wt % coke is produced.

In U.S. 4,035,285, a low molecular weight carbon-hydrogen contributing material and a high molecular weight feedstock, e.g., a gas oil, are combined and reacted in the presence of one or more zeolite catalysts, e.g., zeolite Y with ZSM-5. The resulting cracking and carbon-hydrogen additive products are superior to those formed in the absence of the low molecular weight carbon-hydrogen contributing material. Advantages of the process include improved crackability of heavy feedstocks, increased gasoline yield and/or higher gasoline quality (including octane and volatility), and fuel oil fraction of improved yield and/or burning quality and lower levels of potentially polluting impurities such as sulfur and nitrogen. In addition, the need for high pressure hydrotreaters and hydrocrakers is reduced or eliminated.

A similar process in which full range crude oils and naphtha are catalytically cracked in the presence of such low molecular weight carbon-hydrogen contributing material and zeolites in separate risers of a multiple riser catalytic cracking unit is described in U.S. 3,974,062.

A way has now been discovered to upgrade these refractory stocks. At its most basic level, low molecular weight carbon-hydrogen fragments are generated in the base of the riser, to react with heavy feed added higher up in the riser. This promotes catalytic cracking of the feed to products which contribute to gasoline boiling range material.

Use of an elutriable catalyst, e.g., a mixture of low coke forming, long lasting additive catalyst such as ZSM-5 with conventional FCC catalyst allows refiners to break the chains that heretofore made regeneration of additive catalyst inevitably proceed in lockstep with the conventional catalyst regeneration. Catalyst elutriation allows more efficient fragment generation, and more efficient cracking of the heavy feed.

Accordingly, the present invention provides a catalytic grading process as defined in claim 1. Further features of the invention are defined in the dependent claims.

Each important parameter of the process will be discussed. Those parts of the process which are conventional will receive only brief mention. The following will be considered:

1. Conventional FCC catalysts (e.g., REY in matrix)

2. Additive FCC catalysts (e.g., ZSM-5 in matrix)

3. $H_2$ deficient feeds (e.g., Resids)

4. $H_2$ rich feeds (e.g., propane)

5. FCC cracking conditions (e.g., single or dual riser)

6. Fragment generation (e.g., cracking propane)

7. Riser elutriation

8. Stripper elutriation

9. Sieve stripper

10. Exothermic stripping

11. Conventional catalyst regeneration (e.g., w/air)

12. Catalyst reactivation (e.g., w/olefins)

Although each parameter is discussed, not all embodiment of the invention will require all elements discussed above. All elements will cooperate to upgrade heavy feeds, but economics will determine if, e.g., there is a reasonable return on investment from having both riser elutriation and stripper elutriation.

## CONVENTIONAL FCC CATALYST

Conventional FCC catalysts are either amorphous or zeolite. Most FCC's use zeolite catalyst, typically a large pore zeolite, in a matrix which may or may not possess catalytic activity. These zeolites typically have crystallographic pore dimensions of 7.0 angstroms and above for their major pore opening. Zeolites which can be used in cracking catalysts include zeolite X (U.S. 2,882,244), zeolite Y (U.S. 3,130,007), zeolite ZK-5 (U.S. 3,247,195), zeolite ZK-4 (U.S. 3,314,752) to name a few, and naturally occurring zeolites such as chabazite, faujasite, mordenite, and the like. Silicon-substituted zeolites, described in U.S. 4,503,023 can also be used.

Two or more of the foregoing amorphous and/or large pore crystalline cracking catalysts can be used as the conventional catalyst. Preferred conventional catalysts are the natural zeolites mordenite and faujasite and the synthetic zeolites X and Y with particular preference given zeolites Y, REY, USY and RE-USY.

Such conventional FCC catalysts are well known.

## ADDITIVE FCC CATALYSTS

The present invention permits use of an additive catalyst, with different properties than the conventional catalyst.

Preferred additives comprise the shape selective medium pore zeolites exemplified by ZSM-5, ZSM-11, ZSM-12, ZSM-23, ZSM-35, ZSM-38, ZSM-48 and similar materials.

ZSM-5 is described in U.S. 3,702,886, U.S. Reissue 29,948 and in U.S. 4,061,724 (describing a high silica ZSM-5 as "silicalite").

ZSM-11 is described in U.S. 3,709,979.

ZSM-12 is described in U.S. 3,832,449.

ZSM-23 is described in U.S. 4,076,842.

ZSM-35 is described in U.S. 4,016,245.

ZSM-38 is described in U.S. 4,046,859.

ZSM-48 is described in U.S. 4,375,573.

ZSM-5 is particularly preferred.

The additive zeolites can be modified in activity by dilution with a matrix component of significant or little catalytic activity. The matrix may act as a coke sink. Catalytically active, inorganic oxide matrix material is preferred because of its porosity, attrition resistance and stability under the cracking reaction conditions encountered particularly in a fluid catalyst cracking operation. The additive catalyst may contain up to 50 wt % crystalline material and preferably from 0.5 to 25 wt % in a matrix.

The matrix may include, or may be, a raw or natural clay, a calcined clay, or a clay which has been chemically treated with an acid or an alkali medium or both.

Zeolites in which some other framework element which is present in partial or total substitution of aluminum can be advantageous. For example, such catalysts may convert more feed to aromatics with higher octanes. Elements which can be substituted for part or all of the framework aluminum are boron, gallium, zirconium, titanium and other trivalent metals which are heavier than aluminum. Specific examples of such catalysts include ZSM-5 or zeolite beta containing boron, gallium, zirconium and/or titanium. In lieu of, or in addition to, being incorporated into the zeolite framework, these and other catalytically active elements can also be deposited upon the zeolite by any suitable procedure, e.g., impregnation. Thus, the zeolite can contain a hydrogen-activating function, e.g., a metal such as platinum, nickel, iron, cobalt, chromium, thorium (or other metal capable of catalyzing the Fischer-Tropsch or water-gas shift reactions) or rhenium, tungsten, molybdenum (or other metal capable of catalyzing olefin disproportionation).

## H$_2$ RICH FEEDS

The H$_2$ rich feed for cracking in the lower section of the riser is a C$_3$-C$_4$ paraffin rich feed. The H$_2$-rich feed when cracked in the base of the riser generates gasiform material contributing mobile hydrogen species and/or carbon-hydrogen fragments.

## FRAGMENT GENERATION

Contact of H$_2$-rich feed with hot, regenerated conventional FCC catalyst will both thermally and catalytically crack the feed into reactive fragments.

Temperatures can range from 593 to 816°C (1100 to 1500°F) and preferably 677 to 732°C (1250 TO 1350°c). The catalyst to feed ratio can be 50:1 to 200:1 and preferably is 100:1 to 150:1. The catalyst contact time can be 10 to 50 seconds and preferably is 15 to 35 seconds. Light olefin production is maximized by less severe operation.

Aromatics production is maximized by using more ZSM-5, preferably 0.1 to 25 wt % ZSM-5 and more preferably 1 to 10 wt % ZSM-5.

The easiest way to generate a lot of fragments is to have large amounts of hot regenerated conventional catalyst contact relatively small amounts of light, hydrogen-rich feeds such as propane.

## H$_2$ DEFICIENT FEEDS

Suitable charge stocks for cracking in the upper section of the riser comprise the heavy hydrocarbons generally and, in particular, conventional heavy petroleum fractions, e.g., gas oils, thermal oils, residual oils, cycle stocks, whole crudes, tar sand oils, shale oils, synthetic fuels, heavy hydrocarbon fractions derived from the destructive hydrogenation of coal, tar, pitches, asphalts, hydrotreated feedstocks derived from any of the foregoing, and the like. In short, any conventional feedstock, and preferably a hydrogen-deficient feedstock can be used in the process of this invention.

## RISER ELUTRIATION

It is preferred to have a riser elutriation zone.

This can be a zone either the bottom or top of the riser of increased cross-sectional area. The increased cross-sectional area results in lower superficial vapor velocity in the riser, which allows the catalyst (preferably the additive) with the highest settling velocity to remain longer in the riser.

As a general guidelines, the feed rate, riser cross-sectional area, and additive catalyst properties should be selected so that the additive catalyst settling rate approaches the superficial vapor velocity expected in the riser.

Riser expansion to handle increased molar volumes in the riser reactor would not change superficial vapor velocity and would not produce significant elutriation. Conversely, a constant diameter riser would provide elutriation at the base of the riser.

## STRIPPER ELUTRIATION

The catalyst stripper separates the first and second catalyst components.

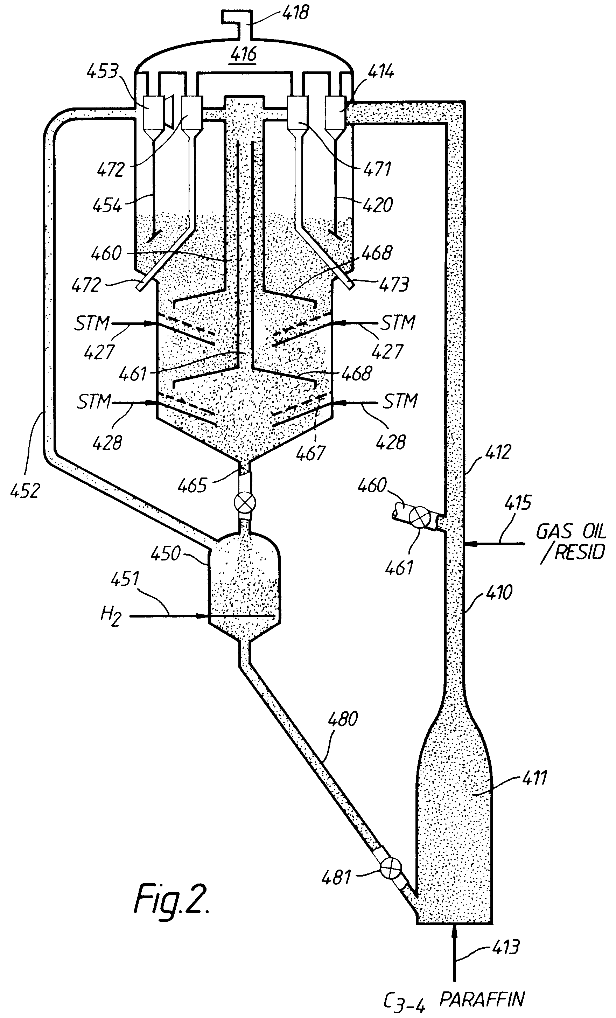

Separation in the stripper can be achieved by particle size difference alone, i.e., a sieve action. Preferably a stripper is used which separates conventional catalyst from additive catalyst by exploiting differences in settling velocity - such a design is shown in Figure 2.

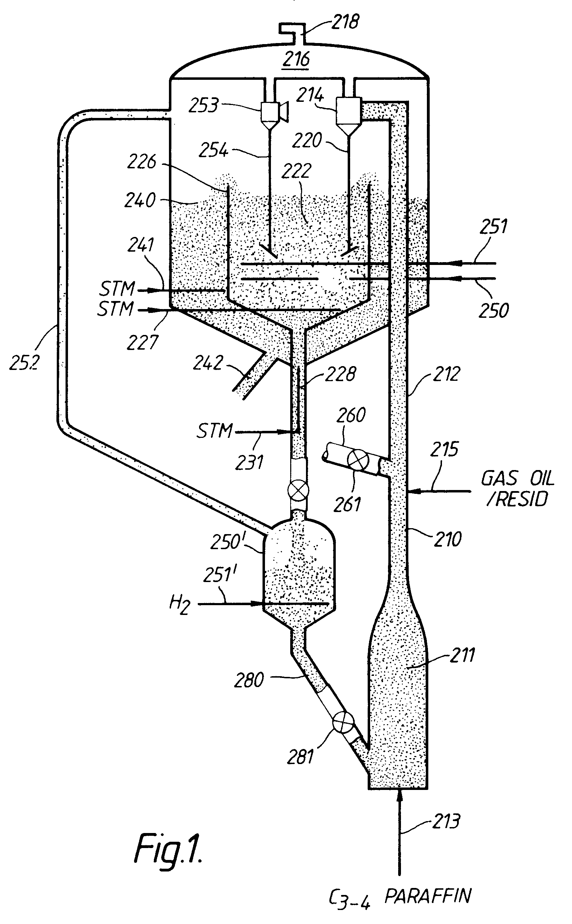

A closely related approach is one which relies to some extent on settline properties and to some extent on catalyst density, as shown in Figure 1.

Stripper elutriation separates additive catalyst from conventional catalyst upstream of the catalyst regenerator. If elutriation occurred in the catalyst regenerator, then the additive catalyst (which may not need regeneration and may be damaged by regeneration) is unnecessarily subjected to regeneration. Thus stripper elutriation significantly reduces additive catalyst residence time in the FCC regenerator.

Additional elutriation may occur in the FCC regenerator, by means not shown, however, it is the goal of the present invention to keep the additive out of the regenerator. Regenerator elutriation would minimize damage to additive catalyst and may be a beneficial way of quickly removing from the regenerator small amounts of additive which will spill over into the regenerator.

Riser elutriation, and stripper elutriation, preferably with the additive catalyst being a denser catalyst which settles rapidly, minimize loss of additive catalyst with catalyst fines. If elutriating cyclones were used to separate a light, readily elutriable additive from reactor effluent prior to discharge from the reaction vessel, then there would be a significant increase in loss of additive catalyst with fines. There would also be a significant dilution effect caused by accumulation of conventional catalyst fines with more elutriatable additives. Finally use of a light additive would reduce the residence time of the additive in the FCC riser reactor, because it would tend to be blown out of the reactor faster than the conventional catalyst.

## EXOTHERMIC STRIPPING

Stripping efficiency can be improved by adding one or more light olefins to a stripping zone. The light olefins form higher molecular weight products (which are valuable) and heat (which aids stripping).

If exothermic stripping is to be practised enough olefins should he added to increase the temperature at least 10°C (50°F) and preferably at least 38°C (100°F) or more.

## CONVENTIONAL CATALYST REGENERATION

The conditions in the FCC catalyst regenerator are conventional. U.S. 4,116,814 (and many other patents) discuss regeneration conditions.

## CATALYST REACTIVATION

Reactivation of additive catalyst, or conventional catalyst, with hydrogen or hydrogen-rich gas may be practised herein. Catalyst reactivation is, per se, conventional.

Reference is now made to the accompanying drawings in which :

Figure 1 shows use of an elutriable catalyst mixture used in conjunction with an elutriating riser, an elutriating stripper, a reaction zone, a resid feed and fragment generation;

Figure 2 shows an embodiment similar to that of Figure 1, but with a preferred elutriating stripper; and

Figure 3 illustrates another configuration of the present invention, using a single elutriating, FCC riser reactor, and an elutriating stripper.

Referring to the drawings, Figure 1 shows use of an elutriable catalyst mixture used in conjunction with an elutriating riser, an elutriating stripper, a reaction zone, a resid feed and fragment generation.

Riser reactor 210 receives $C_3$ and $C_4$ paraffins in lower region 211 through line 213 and stripped, reactivated catalyst via line 280 and valve 281. The stripped catalyst contains a lot of ZSM-5. Conditions in region 211 can be varied to maximize production of aromatics or light olefins, by varying the ZSM-5 content, and using fragment generation conditions previously discussed.

A heavy hydrocarbon feed, e.g., a gas oil and/or resid, is added in region 212 of riser 210 via lines 215. The feed combines with the ascending catalyst-hydrocarbon vapor suspension from region 211. Addition of hot, regenerated conventional catalyst from the regenerator via conduit 260 and valve 261 permits some control of catalyst composition in region 212 and also some control of the temperature. Preferably the zeolite Y concentration is 2 to 50, most preferably 5 to 25 wt %. The temperature can be 482 to 621°C (900 to 1150°F) and preferably 496 to 566°C (925 to 1050°F). The preferred catalyst to heavy hydrocarbon feed ratio is 3:1 to 20:1 and most preferably 4:1 to 10:1. The catalyst contact may be 0.5 to 30 seconds, and preferably 1 to 15 seconds. The heavy hydrocarbon feed cracks in the riser to lower boiling products and reacts with reactive fragments generated in the base of the riser. The riser discharges into cyclone separator 214 which separates catalyst from gas. Catalyst is discharged via dipleg 220 into bed 222. Vapor enters plenum chamber 216.

Vessel 226 occupies a central region of the stripping zone. Stripping gas, e.g., steam, from line 227 in the lower section thereof carries the conventional catalyst out of the vessel. The additive, a dense ZSM-5 containing catalyst, gravitates to and concentrates at the bottom of vessel 226. It is removed via conduit 228 which may have a source of low pressure steam 231 for stripping and to blow conventional catalyst, entrained with the additive, back into bed 222. The additive is then introduced to reactivation vessel 250' which can also operate as a stripper. $H_2$ or $H_2$-rich gas is added via line 251. Reactivation takes place under conventional conditions. Gaseous reactivation effluent, with some entrained catalyst, passes via line 252 to cyclone separator 253. Vapor passes to plenum chamber 216. Catalyst passes to bed 222 via dipleg 254. Reactivated catalyst passes via line 280 and valve 281 to riser 210.

Conventional catalyst displaced from vessel 226 enters outer peripheral regions 240 stripping gas, e.g., steam, is added through conduit 241. Stripping gas, stripped hydrocarbons and reactivation vapor enter cyclone separator 253. Vapor passes to plenum chamber 216. Catalyst enters bed 222 via dipleg 254. Stripped, spent conventional catalyst continues down through the stripper and is sent via line 242 to a regenerator (not shown).

A light olefin feed, e.g., a gas rich in ethylene and/or propylene, may be added to the bottom of bed 222 via line 250 to make higher molecular weight products and generate heat. High temperatures improve the efficiency of the stripper. Enough olefins should be added to increase the temperature at least 28°C (50°F), and preferably by 56°C (100°F) or more. Optionally, if line 250 contains ethylene, then 0.1 to 5 wt % propylene, butylene or mixtures can be added to bed 222 via line 251.

Hydrotreating of the feed may be beneficial. $H_2$ derived from the FCC operation may be compressed and used in the hydrotreater.

The embodiment shown in Figure 2 is essentially like that described in connection with Figure 1 except for the manner in which the additive is separated from the conventional catalyst in the stripper. Descending catalyst bed 422 in an outer region of the stripper encounters stripping gas, e.g. steam, added via lines 427 and 428 which lifts the less dense particles of catalyst, e.g., the conventional catalyst, up concentrically arranged vertical lines 460 and 461. The more dense particles, e.g., ZSM-5 additive catalyst, flow down to be reactivated and then returned to riser 410. Stripping gas is preferably added below perforated baffles 467 to force the elutriable catalyst against baffles 468 and up lines 460 and 461 which lead to one or more cyclone separators 470 and 471 which discharge stripped, spent catalyst via lines 472 and 473 to the regenerator (not shown).

Although Figure 2 shows use of a dense, or less elutriable, additive it is also possible to reverse the relative settling rates and use an additive which is less than the conventional catalyst. In that case the additive will be removed overhead in the stripper.

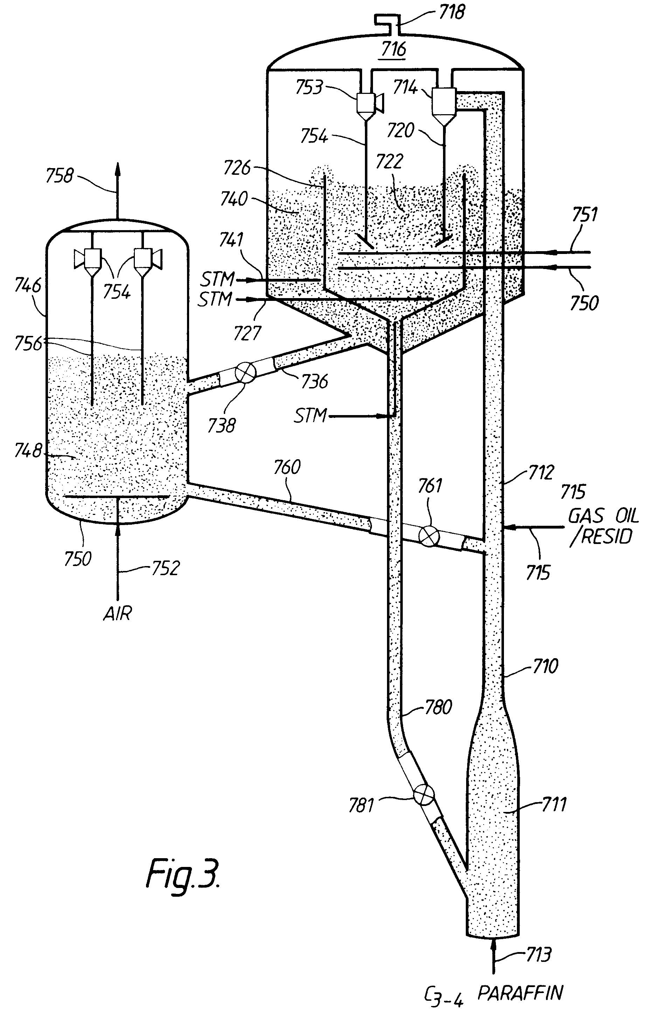

In Figure 3 a light, $H_2$-rich feed, is charged to the base of a riser reactor 711 via line 713. Additive catalyst, rich in ZSM-5, is charged to the base of the riser via lines 780 and valve 781. The base of riser reactor 710 has an enlarged diameter section 711. The residence time of the additive catalyst is greatly enhanced in the riser, because of the lower superficial vapor velocity and the faster settling rate of the additive catalyst.

Roughly midway up the riser conventional hot regenerated catalyst is added via line 760 and valve 761. A conventional heavy feed such as a gas oil or resid fraction is admitted via line 715. The conventional feed reacts with the reactive fragments generated in the base of the riser, and is also cracked by the conventional FCC catalyst. The riser discharges into a cyclone separator 714. Overhead vapor passes into plenum space 716, while catalyst is discharged via dipleg 720 into central elutriating stripper 726. The conventional FCC catalyst is eluded out of the stripper by stripping steam. The heavy ZSM-5 rich additive is withdrawn from the bottom of the stripper, may be subjected to additional steam stripping, and is recycled via lines 780 and 781 to the base of the riser.

The conventional catalyst is recovered from an annular space around stripper 726 and discharged via line 736 and valve 738 into conventional FCC regenerator 746.

In another embodiment, not shown, the elutriating stripper used corresponds to that shown in Figure 2. The hydrogen reactivation zone for additive catalyst (shown in Figure 2) is optional.

## Claims

1. A catalytic cracking process featuring at least one riser reactor, at least one stripping unit and at least one regenerator, which comprises:

   (a) catalytically cracking a $C_3$-$C_4$ paraffin-rich feed in the lower section of said riser wherein the catalyst in the lower section of the riser consists of a second component of a mixed catalyst system, the second component being selected from the group consisting of zeolite Beta, shape selective medium pore crystalline silicate zeolite and admixtures thereof, to provide light olefins and conversion products of light olefins including aromatic and hydrogen;

   (b) cracking a heavy hydrocarbon feed in an upper section of the riser in the presence of both the first and second component of the mixed catalyst system, the first component being at least one member selected from the group consisting of an amorphous cracking catalyst and a large pore crystalline cracking catalyst, to provide gasoline boiling range components, there being sufficient difference between the particle size and/or settling velocity of the catalyst component to permit particles of first catalyst component to be separated from particles of second catalyst component in the stripping unit.

   (c) separating particles of spent first catalyst component from particles of second catalyst component in the stripping unit;

   (d) stripping the separated particles of first catalyst component;

   (e) conveying stripped, spent first catalyst component to the regenerator, the catalyst undergoing regeneration therein;

   (f) conveying regenerated first catalyst component to the upper section of the riser;

   (g) conveying stripped or non-stripped separated particles of second catalyst component to the lower section of the riser.

2. A process according to claim 1, wherein the stripped or non-stripped separated particles of second catalyst from step (g) are conveyed through a reactivation zone, for the second catalyst component to undergo reactivation therein, before being conveyed to the lower section of the riser.

3. A process according to claim 1 or 2 wherein the upper phase is made up mostly of first catalyst component and the lower phase is made up mostly of second catalyst component.

4. A process according to claim 1 or 2 wherein the upper phase is made up mostly of second catalyst component and the lower phase is made up mostly of first catalyst component.

5. A process according to any preceding claim wherein the particles of first catalyst component are on the average of less density than the particles of second catalyst component.

6. A process according to claim 1 or 2 wherein the difference between the average particle size of the first and second catalyst components is such as to permit their separation within the stripping unit by sieving.

7. A process according to any preceding claim wherein the difference between the average particle densities of the first and second catalyst components are such as to permit their separation by elutriation, the particles of lesser average density being carried into a separate peripheral region of the stripping unit.

8. A process according to claim 7 wherein the elutriation is effected using steam.

9. A process according to any preceding claim, wherein one of the first and second catalyst components has a settling velocsity higher than the other, to permit said one catalyst component to remain in the riser longer than said other catalyst component.

Fig.1.

$C_{3-4}$ PARAFFIN

Fig.2.

*Fig.3.*